# FASCICULE DE BREVET EUROPEEN

(11) **EP 2 586 206 B1**
(45) Date de publication et mention de la délivrance du brevet: **03.08.2016**
(21) Numéro de dépôt: 11737998.2
(22) Date de dépôt: 21.06.2011
(51) Int. Cl.: H04N 21/658, H04N 21/258, H04N 21/6377, H04N 21/2343

(54) **SIGNATURE D'ADRESSES URL EN MODE DE COMMUNICATION CONTINUE ADAPTATIVE**
URL-ADRESSENSIGNATUR IN EINEM ADAPTIVEN KONTINUIERLICHEN KOMMUNIKATIONSMODUS
URL ADDRESS SIGNATURE IN AN ADAPTIVE CONTINUOUS COMMUNICATION MODE

(30) Priorité: 23.06.2010 FR 1055024
(43) Date de publication de la demande: 01.05.2013
(73) Titulaire: Orange, 75015 Paris (FR)
(72) Inventeur: VIVOLO, Olivier, F-35000 Rennes (FR); BECKER, Claudia, F-35000 Rennes (FR)
(74) Mandataire: Cabinet Plasseraud
(86) Numéro de dépôt international: PCT/FR2011/051421
(87) Numéro de publication internationale: WO 2011/161369

(56) Documents cités:
- US-B1- 6 934 837
- Alex Zambelli: "IIS Smooth Streaming Technical Overview", , 23 mars 2009 (2009-03-23), pages 1-17, XP002617719, Extrait de l'Internet: URL:http://www.microsoft.com/downloads/en/ details.aspx?FamilyID=03D22583-3ED6-44DA-8 464-B1B4B5CA7520&amp%3Bdisplaylang=en [extrait le 2011-01-21]
- Cisco Systems Inc: "URL Signing and Validation - Appendix B", , 31 août 2009 (2009-08-31), pages B-1-B-6, XP002617720, Extrait de l'Internet: URL:http://www.cisco.com/en/US/docs/video/ cds/cda/is/2_5/configuration_guide/URLsign ing.html [extrait le 2011-01-21]
- Microsoft Corporation: "IIS Smooth Streaming Transport Protocol", , 8 septembre 2009 (2009-09-08), pages 1-55, XP002617721, Extrait de l'Internet: URL:http://www.iis.net/community/files/med ia/smoothspecs/%5BMS-SMTH%5D.pdf [extrait le 2011-01-21]

## Description

La présente invention concerne une communication de données, en mode de communication continue (ou « streaming »).

Il peut s'agir par exemple de données multimédia (audio/vidéo) communiquées à un ou plusieurs terminaux distants, selon un flux continu. Bien entendu, les conditions de communication peuvent varier selon par exemple la bande passante à un instant donné du réseau de communication reliant les terminaux au serveur. Pour ne pas perturber la communication en continu, les données envoyées à un terminal donné sont adaptées aux conditions de la liaison entre ce terminal et le serveur. Ainsi, par exemple dans le cas d'une communication de données vidéo, la résolution d'affichage d'une vidéo sur un écran du terminal peut être plus ou moins élevée en fonction des conditions de communication sur la liaison précitée. Les données vidéo elles-mêmes peuvent donc être différentes en fonction de ces conditions de communication, et, en particulier, sont adaptées à ces conditions. Une telle technique est appelée « adaptive streaming ».

La présente invention concerne plus précisément une communication utilisant la technique des adresses universelles, en particulier des liens de type URL (pour « Uniform Ressource Locator ») activés à partir des terminaux et pointant vers des plateformes de fourniture de contenus, dans le cadre d'une communication de type « adaptive streaming ».

Le protocole « adaptive streaming » est un protocole d'échange de données et de flux audio/vidéo entre un terminal client TER et un serveur de contenu SER permettant, en utilisant des protocoles Internet classiques (http), d'offrir une bonne expérience utilisateur (sur le retour du terminal sur la bande passante ou le débit dont il a bénéficié pour recevoir les données), tout en tenant compte par exemple des variations de bande passante sur la liaison entre le terminal client et le serveur de contenu.

Par exemple si le critère retenu pour tenir compte des conditions de la liaison entre le terminal et le serveur de contenus est le débit via cette liaison, le contenu est encodé à différents débits (correspondant donc à des qualités respectives de restitution sur écran, notamment en termes de résolution). Les différents débits sont découpés en segments temporels (ou «fragments de contenu »). La description de ces différents débits et de la segmentation, ainsi que les fragments de contenu, sont mis à disposition du terminal client sur une plateforme de service.

Le terminal client récupère la description précitée, sous la forme d'un fichier descriptif. Le terminal client demande alors un fragment de contenu identifié dans ce fichier descriptif. En fonction de la bande passante disponible, estimée par exemple à partir du temps de téléchargement d'un fragment, le terminal client demande un fragment suivant de qualité inférieure, égale, ou encore supérieure.

En particulier, dans une telle solution, le terminal client qui se connecte à une plateforme de service reçoit de celle-ci une partie d'adresse URL pointant sur le contenu vers un serveur de contenu dédié, cette partie d'adresse URL étant par exemple du type http://Monserveur/PubPoint.ism.

Ensuite, le terminal client formule une requête au serveur dédié pour obtenir le fichier descriptif précité, décrivant le contenu (les différents débits disponibles pour livrer le contenu, les différents fragments du contenu disponibles, ou autres) en fonction de l'adresse URL précitée et en utilisant en particulier une adresse URL de type : http://Monserveur/PubPoint.ism/Manifest

Le terme "Manifest" dans cette adresse désigne en effet le fichier descriptif précité. Cette terminologie est employée notamment dans un type de streaming adaptatif connu sous le vocable « smooth streaming ». Le fichier descriptif est alors appelé « le manifeste ».

Le terminal client analyse le fichier descriptif reçu, sélectionne un débit en fonction de la liaison vers le serveur de contenus, et demande un flux audio/vidéo en générant plusieurs requêtes de fragments sous forme d'adresses URL à ce serveur. Ces adresses URL sont construites par ajout de paramètres propres aux conditions de débit, à un gabarit d'adresse URL prédéterminé, tel que par exemple :
http://Monserveur/PubPomt.ism/QualityLevels(307200,Compatibility=Handheld)/Fragments(video =1968000)

Dans cet exemple, les fragments requis "1968000" sont demandés à un niveau de qualité vidéo "307200", qui est compatible avec les conditions constatées de la liaison terminal-serveur de contenus.

Toutefois, les conditions de liaison ne sont pas les seuls critères pour servir un terminal. Déjà, un terminal peut avoir des conditions d'accès restreintes à des contenus, ou, dans l'exemple présenté ci-avant, des conditions restreintes et limitées à certains débits seulement, inférieurs à un débit offrant une qualité donnée à laquelle a droit, au maximum, un utilisateur du terminal.

Le document Alex Zambelli, "IIS Smooth Streaming Technical Overview", 23 mars 2009, divulgue une technique de streaming adaptatif basée sur HTTP qui est un procédé hybride de transmission.

Ainsi, il n'existe pas de moyen de vérifier si un terminal détient bien de tels droits restreints, en particulier en mode de communication continue adaptative.

La présente invention vient améliorer la situation.

Elle vise à cet effet un procédé de communication de données selon la revendication 1, une entité serveur selon la revendication 9, un terminal selon la revendication 10 et un système selon la revendication 12. Des modes de réalisations sont décrits dans les revendications dépendantes 2 à 8 et 11.Dans une telle configuration de communication continue adaptative, sur réception d'une requête de fragment de contenu, issue d'un terminal en la forme d'une adresse universelle comportant au moins une valeur courante d'un paramètre de conditions de liaison, l'entité serveur est apte à communiquer à destination du terminal au moins un fragment de contenu qui est fonction de la valeur courante de ce paramètre. Comme décrit à titre d'exemple ci-avant, un tel paramètre peut être un niveau de qualité (sonore ou d'image, ou autres) du fragment sollicité auprès de l'entité serveur.

Néanmoins, au sens de l'invention, une partie au moins de l'adresse universelle reçue par la première entité est signée.

En particulier, cette adresse universelle comporte une signature d'une première adresse universelle (qui peut correspondre par exemple à une requête initiale du contenu global par le terminal). Cette première adresse universelle comporte en particulier une information liée au paramètre précité de conditions de liaison.

L'entité serveur effectue alors les étapes :
- vérifier la signature de la première adresse comportant ladite information,
- vérifier en outre une compatibilité entre ladite information et la valeur courante que comporte l'adresse universelle reçue, et
- en cas de vérifications positives, communiquer à destination du terminal au moins un fragment de contenu fonction de la valeur courante.

Ainsi, la présente invention propose de mettre en oeuvre et d'utiliser une technique de signature d'adresse universelle (URL) pour vérifier par exemple si un terminal détient des droits d'accès des contenus et/ou des qualités de contenu, en particulier en mode de communication continue adaptative. Néanmoins, la présente invention ne vise pas une simple signature d'adresse URL. En effet, il pourrait venir naturellement un homme du métier qu'une telle technique de signature d'adresse URL pourrait directement être transposée et adaptée à une communication en mode de type « adaptive streaming ». En réalité, tel n'est pas le cas pour les raisons qui suivent.

Si une technique de signature d'adresse URL était directement appliquée à une communication continue adaptative, seule la première demande du fichier descriptif pourrait mettre en oeuvre une signature d'adresse URL. Une telle réalisation ne serait pas optimale car la signature de requêtes URL successives pour solliciter des fragments suivants du contenu ne pourrait pas être mise en oeuvre et ne pourrait pas s'appliquer en l'état. En particulier, les requêtes de fragments de contenu audio/vidéo ne peuvent aujourd'hui qu'utiliser des adresses URL non signées.

Ainsi, une fois que le terminal client accèderait au fichier descriptif, plus aucun contrôle d'accès sur les requêtes de fragments de contenu audio/vidéo ne serait mis en oeuvre.

Les paramètres ajoutés par le terminal client ne seraient pas non plus contrôlés par le serveur dédié au streaming de contenu.

Au sens de l'invention, seule une partie de l'adresse URL de requête de fragment est signée et, dans cette partie, la signature est construite au moins avec une information propre au terminal, cette information étant liée au paramètre précité caractérisant les conditions de liaison entre le terminal et l'entité serveur. Cette information peut être par exemple la qualité maximum de contenu à laquelle à droit le terminal, lorsque le paramètre précité indique une condition de débit possible sur la liaison entre le terminal et l'entité serveur (fixant alors la qualité de contenu à un niveau maximum donné). L'entité serveur vérifie alors l'authenticité de la signature et en outre si l'information précitée est bien compatible avec une valeur de paramètre requise dans l'adresse URL émisse par le terminal. Par exemple, si la valeur de paramètre requise pour la communication d'un fragment correspond à une qualité de contenu supérieure à celle à laquelle a droit le terminal, d'après l'information précitée, alors l'entité serveur peut refuser d'accorder le fragment de contenu à la qualité demandée par le terminal dans l'adresse URL.

Dans un exemple de réalisation, l'information précitée peut être une valeur seuil du paramètre précité, cette valeur étant propre au terminal (par exemple, un niveau de qualité maximum auquel a droit le terminal, comme décrit à titre d'exemple de réalisation ci-après). Ainsi, l'entité serveur peut vérifier que la valeur courante que requiert le terminal pour la communication d'un fragment est bien compatible avec la valeur seuil indiquée dans une partie d'adresse URL à cet effet. Par exemple, si le terminal a droit habituellement à une qualité maximum de contenu, l'entité serveur vérifie que la qualité requise pour la communication d'un fragment (en tant que valeur courante de paramètre) ne dépasse pas la qualité maximum à laquelle a droit ce terminal (en tant que valeur seuil du paramètre).

Ainsi, dans une telle réalisation, le terminal dispose d'un droit d'accès à une qualité de contenu maximum, prédéterminée. La valeur seuil correspond alors au maximum de qualité de contenu à laquelle a droit le terminal, tandis que la valeur courante de paramètre correspond à un maximum de qualité de contenu que permettent les conditions de liaison entre le terminal et l'entité serveur.

Bien entendu, il ne s'agit pas de la seule réalisation possible et, en complément ou en variante, le terminal peut disposer aussi d'un droit d'accès à un nombre maximum de fragments de contenu, prédéterminé, par exemple par requête de fragments. La valeur seuil correspond alors à ce nombre maximum de fragments de contenu auquel a droit le terminal, tandis que la valeur courante de paramètre correspond à un nombre maximum de fragments de contenu à communiquer que permettent les conditions de liaison entre le terminal et l'entité serveur.

Dans les deux cas, l'entité serveur vérifie que la valeur courante du paramètre dans la requête URL reste inférieure ou égale à la valeur maximum à laquelle a droit le terminal, indiquée dans la requête URL signée.

Dans un mode de réalisation, la première adresse universelle précitée peut être construite sur réception d'une requête initiale du contenu global issue du terminal. Il est alors avantageux de déporter la fonction de réponse à cette requête initiale auprès d'une plateforme de service dédiée, distincte de la première entité serveur. Ainsi, dans une telle réalisation, le procédé comporte une étape préalable dans laquelle une deuxième entité serveur transmet à destination du terminal la signature de la première adresse comportant l'information précitée, sur réception de la requête initiale du contenu global, issue du terminal en la forme de la première adresse universelle.

Dans une telle réalisation, la deuxième entité serveur est distincte de la première entité serveur, et la deuxième entité serveur comporte une plateforme de service pour répondre au terminal, tandis que la première entité serveur comporte au moins une plateforme de livraison de contenu pour fournir les fragments de contenu au terminal.

Il peut être avantageux en effet dans certaines conditions d'avoir recours à une ou plusieurs plateformes de livraison de contenus pour ne pas surcharger la plateforme de service avec la fonctionnalité de livraisons de contenus. La présente invention permet avantageusement de séparer l'entité fournissant la signature (la plateforme de service) de l'entité fournissant le contenu et vérifiant la signature.

Néanmoins, dans une variante, les première et deuxième entités peuvent être une même entité serveur.

Dans une application avantageuse, les fragments et les valeurs précitées de paramètre lié aux conditions de liaison sont définis dans un fichier descriptif que la première entité serveur transmet à destination du terminal, sur réception d'une requête de ce fichier descriptif issue du terminal en la forme d'une adresse universelle comportant la signature de la première adresse universelle.

Dans un mode de réalisation particulier, le procédé peut comporter alors la succession globale d'étapes conformément aux étapes de la revendication 1.

La présente invention vise aussi un programme informatique comportant des instructions pour la mise en oeuvre du procédé ci-avant, lorsque ce programme est exécuté par un processeur.

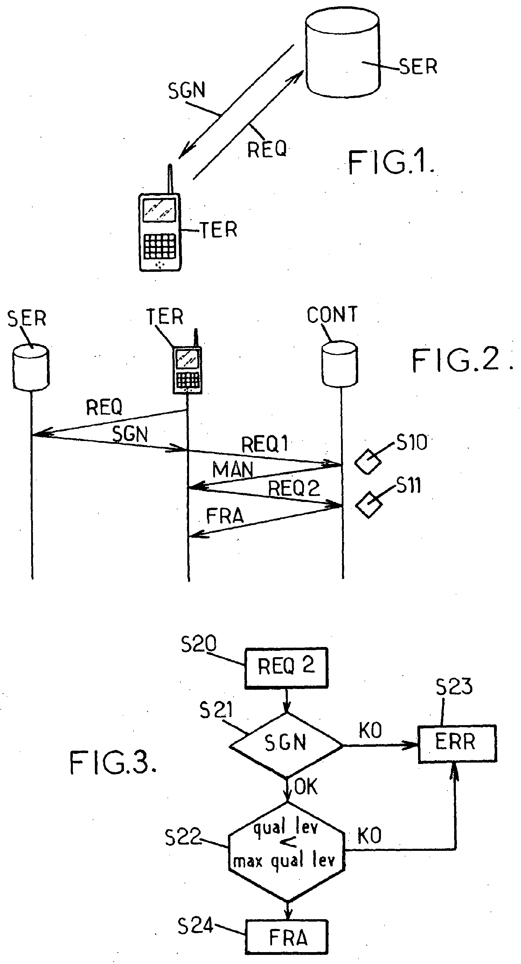

Ce programme peut être distribué entre la première entité serveur, le terminal et éventuellement la deuxième entité serveur. A titre d'exemple, la figure 3 commentée ci-après peut constituer une partie au moins d'un organigramme représentant l'algorithme général d'un tel programme.

D'autres caractéristiques et avantages de l'invention apparaîtront à l'examen de la description détaillée ci-après, et des dessins annexés sur lesquels :
- la figure 1 illustre un exemple de réalisation de la signature de la première adresse universelle précitée, mise en oeuvre par échanges entre le terminal et la deuxième entité précitée en tant que plateforme de service,
- la figure 2 illustre les différents échanges entre le terminal, la plateforme de service et la plateforme de fourniture de contenus, dans un exemple de réalisation d'un système au sens de l'invention,
- la figure 3 résume les différentes étapes mises en oeuvre auprès de la plateforme de fourniture de contenus, lorsqu'elle reçoit une requête courante de fourniture de fragment,
- la figure 4 illustre schématiquement un exemple d'une première entité pour la livraison de contenus, comportant des moyens adaptés pour la mise en oeuvre de l'invention,
- la figure 5 illustre schématiquement une deuxième entité pour la fourniture d'une signature, en tant que plateforme de service, dans un exemple de réalisation de l'invention,
- la figure 6 illustre schématiquement un exemple de terminal comportant des moyens adaptés pour la mise en oeuvre de l'invention.

On décrit tout d'abord en référence à la figure 1 une technique de signature d'adresse URL appliquée dans un exemple de réalisation de la présente invention. Le vocable « adresse URL » est simplement désigné par « URL » ci-après.

Une telle technique est d'ailleurs utilisée habituellement pour effectuer un contrôle d'accès à des contenus multimédias, tels que les contenus audio/vidéo par exemple. Elle consiste à ajouter une information (habituellement une signature cryptographique) à l'URL de demande du contenu.

Ainsi, en référence à la figure 1 illustrant les différents types d'URL transmisses dans une telle application, un terminal client TER demande un contenu à une plateforme de service SER en émettant la requête REQ. Cette requête comporte typiquement des informations sur le contenu requis dans l'URL envoyée à la plateforme SER. Après vérification des droits de l'utilisateur sur ce contenu auprès de la plateforme SER, cette dernière ajoute à l'URL générique du contenu, par exemple, les paramètres suivants :
- l'adresse IP (pour « Internet Protocol ») du terminal client TER,
- la durée de validité de l'URL donnée à ce terminal.

L'URL renvoyée (portant la référence SGN sur la figure 1) est signée par des moyens cryptographiques auprès de la plateforme SER, avant d'être envoyée au terminal client TER.

La même URL signée SGN est alors envoyée ultérieurement depuis le terminal client TER à la plateforme SER pour solliciter les données successives audio/vidéo. La plateforme SER vérifie alors la conformité de l'URL signée et en particulier que :
- l'adresse IP du client correspond à la valeur insérée dans l'URL,
- l'URL est bien valide par rapport à sa durée de validité, et
- la signature cryptographique de l'URL est bien authentique.

Si toutes ces vérifications réussissent alors, la plateforme de service SER retourne au terminal TER le contenu en réponse à la réception de l'URL signée. Sinon, elle redirige éventuellement le terminal vers une page d'erreur.

Cette technique est généralement appliquée à du téléchargement (en protocole http). Toutefois, elle peut être adaptée avantageusement aussi à du streaming en temps réel (ou « rtsp », pour « Real Time Streaming Protocol »).

On se réfère maintenant à la figure 2 sur laquelle, dans l'exemple représenté, un terminal client TER est apte à communiquer avec une première plateforme SER, de service, et une deuxième plateforme CONT, de fourniture de contenu.

Le terminal client se connecte tout d'abord à la plateforme de service SER, en formulant une requête REQ d'un contenu. Le terminal reçoit en retour une URL signée SGN pointant sur le contenu auprès de la plateforme CONT de fourniture de contenu. Dans l'exemple décrit, la requête est formulée avec une contrainte sur un niveau de qualité souhaité : « QualityMaxLevel ».

A titre d'exemple, l'URL signée est de type : http://Monserveur/ PubPoint.ism/QualityMaxLevel=600000/Signature, où :
- « 600000 » représente un niveau de qualité d'image maximal, par exemple pour une vidéo, et
- « Signature » correspond par exemple à une valeur numérique résultat de la fonction de signature de la première URL (fonction de hachage, ou autre).

Le terminal client formule alors une requête du contenu auprès de la deuxième plateforme CONT, selon une requête REQ1 incluant cette URL signée SGN, pour obtenir le fichier descriptif du contenu (avec différents débits de fragments du contenu disponible notamment). Ce fichier descriptif peut être par exemple le fichier « manifeste » décrivant le contenu, dans un mode de streaming adaptatif appelé « smooth streaming », avec alors par exemple l'URL suivant pour la requête REQ1 :
http://Monserveur/PubPoint.ism/QualityMaxLevel=600000/Signature/Manifest où "Manifest" désigne le fichier "Manifeste" précité.

On relèvera que cette URL comporte la valeur de niveau de qualité "QualityMaxLevel" auquel prétend le terminal, ainsi que la signature calculée notamment avec cette valeur.

La plateforme de fourniture de contenu CONT vérifie la signature insérée (étape S10). Si cette dernière est correcte, la plateforme CONT lui retourne le fichier « manifeste » (référence MAN de la figure 2).

Le terminal client TER analyse le fichier manifeste reçu, sélectionne un débit, et demande un flux audio/vidéo en générant une requête REQ2 à la plateforme de fourniture de contenu CONT, selon une adresse URL de type :
http://Monserveur/PubPoint.ism/QualityMaxLevel=600000/Signature/QualityLevels(30 7200.Compatibility=Handheld)/Fragments(video= 1968000)

- où "Fragments(video=1968000)" désigne un fragment de contenu, et
- "QualityLevels(307200,Compatibility=Handheld)" désigne une qualité de service souhaitée pour ce fragment, tenant compte des conditions de communication sur la liaison entre le terminal TER et la plateforme CONT.

La plateforme de fourniture de contenu CONT vérifie la signature insérée dans cette dernière requête (étape S11). La plateforme CONT détermine aussi, par exemple, si la qualité vidéo demandée est autorisée pour ce terminal client et si elle peut alors lui être fournie. Si toutes les vérifications réussissent, la plateforme CONT retourne au terminal le flux audio/vidéo correspondant au fragment de contenu demandé FRA. Sinon, la plateforme refuse la communication de contenu ou renvoie une page d'erreur.

La signature initiale de l'URL SGN est générée par la plateforme de service SER, après authentification de l'utilisateur et vérification de ses droits. Dans l'exemple décrit, la plateforme de service SER vérifie si le terminal client TER a bien droit à un indice maximum de niveau de qualité (600000). Comme on l'a vu précédemment, l'URL générée par la plateforme de service SER mentionne la qualité maximum autorisée pour ce terminal client TER.

Une partie de l'URL générée est signée (cette partie étant par exemple http://Monserveur/PubPoint.ism/QualityMaxLevel=600000/), ce qui garantit l'intégrité et l'authenticité de l'information de qualité maximum autorisée. De fait, un utilisateur malveillant du terminal ne peut pas modifier l'URL en sollicitant une meilleure qualité maximum, la signature de l'URL ne pouvant pas alors être authentifiée.

Cette partie d'URL signée est ensuite utilisée par le terminal client TER lors de ses échanges avec la plateforme de fourniture de service CONT pour requérir d'abord le fichier manifeste, puis les fragments successifs du contenu. La plateforme de fourniture de service CONT reçoit donc dans chaque requête la qualité maximum autorisée pour ce terminal client, selon les conditions du réseau (ou plus génériquement de la liaison) entre le terminal TER et la plateforme CONT, laquelle peut donc vérifier si le terminal client demande une qualité compatible (donc inférieure ou égale) avec cette qualité maximum autorisée. Un utilisateur malveillant du terminal ne peut pas alors solliciter une qualité supérieure en modifiant lui-même l'URL, car alors la plateforme de fourniture de service CONT refuserait la requête. La signature garantit ainsi que le paramètre « QualityMaxLevel=600000 » est authentique et respecté.

On a représenté schématiquement sur la figure 3 les différentes étapes mises en oeuvre par la première entité serveur en tant que plateforme de fourniture de contenus CONT. Sur réception de la requête REQ2 de fourniture de fragment issue du terminal (S20), la plateforme CONT vérifie tout d'abord la signature SGN qui est ajoutée à l'URL formant la requête REQ2. A cet effet, la plateforme CONT dispose de moyens cryptographiques adéquats. Si la signature n'est pas valide (flèche KO en sortie du test S21), la plateforme CONT peut répondre à la requête REQ2 par une redirection vers une page d'erreur ERR (étape S23). En revanche, si la signature est valide (flèche OK en sortie du test S21), la plateforme CONT détermine la valeur maximum (max qual lev) du critère choisi pour le paramètre relatif aux conditions de liaison (un critère de qualité lié au débit qu'offre la liaison, par exemple). Cette valeur est incluse dans la requête URL qu'envoie le terminal TER à la plateforme de service SER dans la requête de contenu REQ2. Par ailleurs, la plateforme de fourniture de service CONT a reçu dans la requête REQ2 (à l'étape S20) une valeur courante du paramètre relatif aux conditions de liaison (par exemple une valeur de qualité « qual lev » du fragment souhaité, déterminée par exemple à partir du débit qu'a pu mesurer le terminal sur la liaison avec la plateforme CONT).

A l'étape S22, la plateforme CONT compare la valeur maximum (max qual lev) à la valeur courante du paramètre (qual lev) et, en particulier, si la valeur courante est supérieure à la valeur maximum (flèche KO en sortie du test S22), le terminal peut être redirigé vers la page d'erreur ERR (étape S23), ou, en variante, recevoir de la plateforme CONT le fragment demandé mais à la qualité de niveau maximum accordée pour ce terminal : « max qual lev ». Si en revanche la valeur courante reste inférieure à la valeur maximum (flèche OK en sortie du test S22), la plateforme CONT transmet à destination du terminal le fragment demandé et à la qualité de niveau adéquat estimée par le terminal: « qual lev » (étape 24).

La présente invention permet ainsi d'appliquer avantageusement la technique de signature d'adresse URL au mode de communication de type « adaptive streaming » en tenant compte et en tirant partie des spécificités de ce mode de communication. L'invention fournit ainsi une possibilité de restrictions d'accès, sur de nouveaux critères (tels que la qualité audio/vidéo maximum, ou autres critères décrits à titre d'exemples plus loin), à des contenus pour des terminaux clients d'un service de streaming La plateforme de service SER, en fonction des droits au service du terminal client, incorpore dans l'URL d'accès au contenu les restrictions propres au terminal client, tandis que la plateforme de fourniture de contenu vérifie, quant à elle, ces restrictions en fonction des demandes formulées par le terminal client. En outre, une telle réalisation permet de ne mettre en oeuvre qu'un unique mécanisme de fourniture de contenus pour tous les terminaux clients, permettant ainsi une simplification du service.

Ainsi, un nouveau type de paramètre est ajouté dans les URLs de publication, de fichier descriptif (« manifeste » par exemple), et plus généralement dans le gabarit d'URL, tant pour le gabarit d'URL lui-même que pour sa signature, avantageusement en mode de communication d'adaptive streaming.

Les avantages que procure l'invention sont nombreux. Notamment, elle permet de contrôler chacune des requêtes du terminal client et en particulier les paramètres insérés par le terminal client dans l'URL de la requête. Elle permet aussi de restreindre, au niveau du service, l'accès à une qualité haute définition, par exemple à certains terminaux clients non autorisés ou simplement non équipés pour ce service. Par ailleurs, comme on le verra ci-après dans la présentation d'une liste plus exhaustive de paramètres susceptibles d'intervenir pour la caractérisation des conditions de liaison entre le terminal et le serveur de contenus, l'invention permet aussi de restreindre le nombre de fragments fournis à certains terminaux clients.

Ainsi, la présente invention permet de garantir l'authenticité de certaines informations contenues dans des URLs et utilisées par le terminal client pour demander des fragments successifs de contenus, dans le cadre d'une communication de streaming adaptatif, par exemple de type smooth streaming

La présente invention vise aussi la première entité serveur comportant en particulier des moyens au moins pour :
- vérifier la signature de la première adresse comportant l'information précitée,
- vérifier en outre une compatibilité entre cette information et la valeur courante que comporte l'adresse universelle reçue, et
- en cas de vérifications positives, communiquer à destination du terminal au moins un fragment de contenu fonction de la valeur courante.

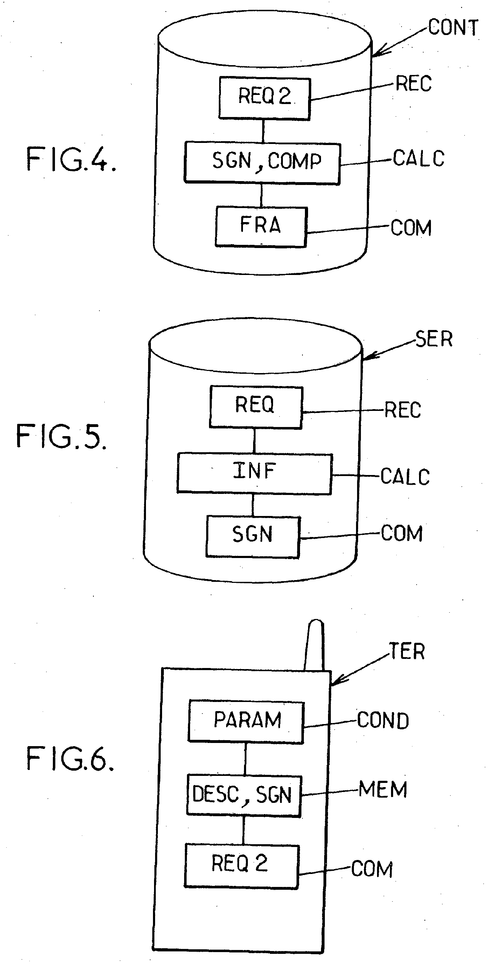

On a représenté sur la figure 4 une telle entité serveur pour la fourniture de contenus. Cette entité CONT comporte dans l'exemple représenté des moyens REC de réception d'une requête de fragment REQ2 issue d'un terminal. Elle comporte en outre des moyens de calcul CALC pour vérifier la signature SGN de la première adresse comportant l'information précitée propre au terminal. Ces moyens CALC peuvent être agencés en outre pour vérifier aussi une compatibilité COMP entre cette information et la valeur courante que comporte l'adresse universelle reçue REQ2. L'entité serveur CONT comporte en outre un module de communication COM, pour envoyer à destination du terminal au moins un fragment FRA de contenu en fonction de la valeur courante, en cas de vérifications positives.

La présente invention vise aussi la deuxième entité serveur comportant des moyens au moins pour transmettre à destination du terminal la signature de la première adresse comportant la valeur seuil, sur réception d'une requête initiale du contenu global issue du terminal en la forme de la première adresse universelle.

On a alors représenté sur la figure 5 une telle entité serveur pour la génération de signature SGN. Cette entité SER (du type représenté sur la figure 1) comporte des moyens de réception REC de la première requête de contenu issue du terminal REQ. Cette requête REQ comporte notamment l'information propre au terminal INF (comme par exemple le niveau maximum de qualité d'un fragment autorisé pour le terminal). L'entité serveur SER comporte en outre des moyens de calcul CALC pour générer la signature SGN de cette première requête de contenu REQ, ainsi que des moyens de communication COM de la signature SGN, à destination du terminal.

La présente invention vise aussi le terminal comportant alors des moyens au moins pour :
- déterminer des conditions de liaison et estimer une valeur courante du paramètre caractérisant les conditions de liaison,
- à partir de la description des fragments et des valeurs de paramètre lié aux conditions de liaison (indiqués dans le fichier descriptif précité), former une requête d'au moins un fragment de contenu en la forme d'une adresse universelle comportant :
   * la valeur courante estimée du paramètre pour ce fragment, et
   * la signature de la première adresse universelle.

On a alors représenté sur la figure 6 un tel terminal TER. Par exemple, le terminal comporte des moyens COND pour déterminer des conditions de liaison et estimer une valeur courante du paramètre PARAM caractérisant les conditions de liaison. Le terminal peut comporter en outre une mémoire MEM pour stocker une description DESC des fragments et les valeurs correspondantes du paramètre lié aux conditions de liaison (par exemple sous la forme d'un fichier « manifeste »). La mémoire du terminal peut stocker en outre la signature SGN qu'il a reçue de l'entité serveur SER générant cette signature. Le terminal comporte ensuite des moyens COM pour former une requête d'au moins un fragment de contenu, destinée à l'entité serveur CONT, sous la forme d'une adresse universelle REQ2 comportant :
* la valeur courante estimée PARAM du paramètre pour ce fragment, et
* la signature SGN de la première adresse universelle précitée.

La présente invention vise aussi un système comportant au moins une entité serveur telle que la première entité précitée CONT, ainsi qu'un terminal TER. Dans une réalisation où les première et deuxième entités sont distinctes, le système comporte en outre une deuxième entité serveur SER, pour bénéficier d'une architecture prévoyant une séparation entre la plateforme de service et la plateforme de livraison de contenus.

Bien entendu, la présente invention ne se limite pas à la forme de réalisation décrite ci-avant à titre d'exemple ; elle s'étend à d'autres variantes.

Par exemple, on a décrit ci-avant le contrôle d'un paramètre de communication correspondant à la qualité d'image. En complément ou en variante, le contrôle d'autres paramètres sont possibles, tels que par exemple des paramètres de type :
- « AudioAuthorized », fixant qu'une composante audio est autorisée pour le terminal client,
- « VideoAuthorized », fixant qu'une composante vidéo est autorisée pour le terminal client,
- « FragmentVideoMax », fixant le maximum de fragments vidéo autorisés pour le terminal, client,
- « FragmentAudioMax », fixant le maximum de fragments audio autorisés pour le terminal, client,
- « QualityMaxLevel », fixant le maximum de la qualité audio et vidéo autorisé pour un terminal client,
- « VideoQualityMaxLevel », fixant le maximum de la qualité vidéo autorisé pour un terminal client,
- « AudioQualityMaxLevel », fixant le maximum de la qualité audio autorisé pour un terminal client.

L'un au moins de ces paramètres peut être combiné dans la signature à d'autres paramètres, tels que par exemple les paramètres :
- « Validity », fixant une durée de validité de toutes les requêtes envoyées par le terminal client,
- « IpAddress », déterminant l'adresse IP du terminal client autorisé par la plateforme de service.

Par ailleurs, il est indiqué précédemment que le terminal peut être dirigé vers une page d'erreur, en cas de non-authenticité d'une signature d'URL. En variante, si la plateforme CONT refuse la signature, elle peut renvoyer par exemple un code d'erreur explicite permettant au terminal client d'essayer avec une nouvelle qualité vidéo/audio plus réduite, ce qui permet de ne pas faire intervenir l'utilisateur du terminal.

## Revendications

1. Procédé de communication de données, dans lequel une première entité serveur (CONT) émet des données de contenu destinées à au moins un terminal (TER), en une pluralité de fragments successifs selon un mode de communication continue, les données de contenu étant encodées dans la première entité serveur (CONT) à différents niveaux de qualité et découpées en fragments successifs pour chaque niveau de qualité, en vue de la sélection d'un niveau de qualité par le terminal (TER) en fonction de conditions de liaison entre le terminal et la première entité serveur, procédé dans lequel, sur réception d'une requête (REQ2) d'au moins un fragment de contenu, issue d'un terminal en la forme d'une adresse universelle comportant au moins une valeur courante d'un niveau de qualité demandé, la première entité serveur est apte à communiquer à destination du terminal un fragment (FRA) de contenu à ladite valeur courante du niveau de qualité demandé, **caractérisé en ce que** ladite adresse universelle (REQ2) inclut une signature (SGN) d'une première adresse universelle, ladite première adresse universelle comportant une information relative à un paramètre de communication à contrôler et propre au terminal,
**en ce que** le procédé comporte une étape préalable dans laquelle une deuxième entité serveur (SER) transmet à destination du terminal ladite signature (SGN) de la première adresse universelle, sur réception d'une requête (REQ) initiale du contenu global, issue du terminal en la forme de la première adresse universelle;
et **en ce que** la première entité serveur (CONT) effectue les étapes :
- vérifier (S21) la signature de la première adresse universelle,
- comparer (S22) ladite information et la valeur courante du niveau de qualité demandé que comporte l'adresse universelle reçue (REQ2), et
- en cas. de vérification et de comparaison positives, communiquer à destination du terminal au moins un fragment (FRA) de contenu à la valeur courante du niveau de qualité demandé.

2. Procédé selon la revendication 1, **caractérisé en ce que** ladite information comporte une valeur seuil dudit paramètre de communication, et **en ce que** la première entité serveur compare la valeur courante du paramètre de communication que comporte l'adresse universelle reçue (REQ2) à ladite valeur seuil pour vérifier ladite compatibilité (S22).

3. Procédé selon la revendication 2, dans lequel le terminal dispose d'un droit d'accès à une qualité de contenu maximum, prédéterminée, **caractérisé en ce que** la valeur seuil correspond au maximum de qualité de contenu à laquelle a droit le terminal, et **en ce que** la valeur courante de niveau de qualité correspond à un maximum de qualité de contenu que permettent les conditions de liaison entre le terminal et la première entité serveur.

4. Procédé selon l'une des revendications 2 et 3, dans lequel le terminal dispose d'un droit d'accès à un nombre maximum de fragments de contenu, prédéterminé, **caractérisé en ce que** la valeur seuil correspond audit nombre maximum de fragments de contenu auquel a droit le terminal, et **en ce que** la valeur courante du paramètre de communication correspond à un nombre maximum de fragments de contenu à communiquer que permettent les conditions de liaison entre le terminal et la première entité serveur.

5. Procédé selon la revendication 1, **caractérisé en ce que** la deuxième entité serveur (SER) est distincte de la première entité serveur (CONT), **en ce que** la deuxième entité serveur comporte une plateforme de service et **en ce que** la première entité serveur comporte une plateforme de livraison de contenu.

6. Procédé selon l'une des revendications précédentes, **caractérisé en ce que** lesdits fragments et lesdits niveaux de qualité sont définis dans un fichier descriptif (MAN) que la première entité serveur transmet à destination du terminal, sur réception d'une requête dudit fichier descriptif, issue du terminal en la forme d'une adresse universelle (REQ1) comportant ladite signature (SGN) de la première adresse universelle.

7. Procédé selon la revendication 1, **caractérisé en ce qu'**il comporte les étapes :
- sur réception d'une requête initiale (REQ) du contenu global, issue du terminal (TER) en la forme de ladite première adresse universelle, la deuxième entité serveur (SER) transmet à destination du terminal ladite signature (SGN) de la première adresse universelle comportant ladite information relative à un paramètre de communication à contrôler et propre au terminal,
- le terminal (TER) émet une deuxième requête (REQ1) d'un fichier descriptif définissant lesdits fragments et lesdits niveaux de qualité, ladite deuxième requête (REQ1) étant destinée à la première entité serveur (CONT) et ayant pour forme une adresse universelle incluant ladite signature (SGN) de la première adresse universelle,
- la première entité serveur (CONT), sur réception de la deuxième requête (REQ1) issue du terminal, vérifie (S10) ladite signature et, si la vérification est positive, transmet à destination du terminal (TER) ledit fichier descriptif (MAN),
- sur la base d'une détermination des conditions de liaison et de la description des fragments et des niveaux de qualité, le terminal (TER) émet une requête (REQ2) d'au moins un fragment de contenu en la forme d'une adresse universelle (REQ2) comportant :
* une valeur courante du niveau de qualité pour ledit au moins un fragment, et
* ladite signature (SGN) de la première adresse universelle,
- et, sur la base de ladite adresse universelle reçue, la première entité serveur (CONT) :
* vérifie (S21) la signature (SGN) de la première adresse universelle, afin de vérifier une authenticité de ladite information,
* compare (S22) ladite information relative à un paramètre de communication à contrôler et une valeur courante du paramètre de communication que comporte l'adresse universelle reçue (REQ2), et
* en cas de vérification et de comparaison positives, communique à destination du terminal au moins un fragment (FRA) de contenu fonction de la valeur courante du niveau de qualité demandé.

8. Programme informatique comportant des instructions pour la mise en oeuvre du procédé selon l'une des revendications 1 à 7, lorsque ce programme est exécuté par un processeur.

9. Système comprenant une première entité serveur (CONT) apte à émettre des données de contenu destinées à au moins un terminal (TER), en une pluralité de fragments successifs selon un mode de communication continue, les données de contenu étant encodées dans ladite première entité serveur (CONT) à différents niveaux de qualité et découpées en fragments successifs pour chaque niveau de qualité, en vue de la sélection d'un niveau de qualité par le terminal (TER) en fonction de conditions de liaison entre le terminal et la première entité serveur,
dans laquelle, sur réception d'une requête (REQ2) d'au moins un fragment de contenu, issue d'un terminal en la forme d'une adresse universelle comportant au moins une valeur courante d'un niveau de qualité demandé, la première entité serveur est en outre apte à communiquer à destination du terminal un fragment (FRA) de contenu à ladite valeur courante du niveau de qualité demandé,
ledit système comprenant en outre une deuxième entité serveur (SER), comportant des moyens au moins pour transmettre à destination du terminal une signature (SGN) d'une première adresse universelle, sur réception d'une requête (REQ) initiale du contenu global, issue du terminal en la forme de la première adresse universelle, ladite première adresse universelle comportant une information relative à un paramètre de communication à contrôler et propre au terminal,
ladite adresse universelle (REQ2) comprenant la signature (SGN) de la première adresse universelle,
la première entité serveur (CONT) étant **caractérisée en ce qu'**elle comporte des moyens au moins pour :
- vérifier (S21) la signature (SGN) de la première adresse universelle,
- comparer (S22) ladite information et une valeur courante du niveau de qualité demandé que comporte l'adresse universelle reçue (REQ2), et
- en cas de vérification et de comparaison positives, communiquer à destination du terminal au moins un fragment (FRA) de contenu à la valeur courante du niveau de qualité demandé.

10. Terminal (TER) apte à recevoir des données de contenu en une pluralité de fragments successifs selon un mode de communication continue, les données de contenu étant encodées dans une première entité serveur (CONT) à différents niveaux de qualité et découpées en fragments successifs pour chaque niveau de qualité, apte à émettre une requête (REQ2) d'au moins un fragment de contenu en la forme d'une adresse universelle comportant au moins une valeur courante d'un niveau de qualité demandé, et apte à recevoir de la première entité serveur un fragment (FRA) de contenu à ladite valeur courante du niveau de qualité demandé, **caractérisé en ce qu'**il comporte des moyens au moins pour :
- émettre à destination d'une deuxième entité serveur une requête initiale (REQ) du contenu global en la forme de ladite première adresse universelle,
- recevoir de la deuxième entité serveur une signature (SGN) de la première adresse universelle comportant une information relative à un paramètre de communication à contrôler et propre au terminal,
- émettre une deuxième requête (REQ1) d'un fichier descriptif définissant lesdits fragments et lesdits niveaux de qualité, ladite deuxième requête (REQ1) étant destinée à la première entité serveur (CONT) et ayant pour forme une adresse universelle incluant ladite signature (SGN) de la première adresse universelle,
- recevoir ledit fichier descriptif,
déterminer des conditions de liaison entre le terminal et la première entité serveur et sélectionner un niveau de qualité demandé en fonction des conditions de liaison, dans lequel la requête (REQ2) de fragment de contenu comprend :
* une valeur courante dudit paramètre de communication, et
* ladite signature (SGN) de la première adresse universelle.

11. Terminal (TER) selon la revendication 10, **caractérisé en ce qu'**il comporte en outre des moyens pour insérer ladite information au moins dans la requête initiale (REQ) du contenu global pour former ladite première adresse universelle.

12. Système selon la revendication 9 comportant en outre un terminal (TER) selon l'une des revendications 10 et 11.

## Patentansprüche

1. Datenübermittlungsverfahren, wobei eine erste Server-Entität (CONT) für mindestens ein Endgerät (TER) bestimmte Inhaltsdaten in einer Vielzahl von aufeinanderfolgenden Fragmenten gemäß einer kontinuierlichen Betriebsart sendet, wobei die Inhaltsdaten in der ersten Server-Entität (CONT) auf verschiedenen Qualitätsniveaus codiert und für jedes Qualitätsniveau in aufeinanderfolgende Fragmente zerlegt werden, für die Auswahl eines Qualitätsniveaus durch das Endgerät (TER) abhängig von Verbindungsbedingungen zwischen dem Endgerät und der ersten Server-Entität,
Verfahren, bei dem bei Empfang einer Anforderung (REQ2) mindestens eines Inhaltsfragments, die von einem Endgerät in Form einer Universaladresse stammt, die mindestens einen laufenden Wert eines geforderten Qualitätsniveaus aufweist, die erste Server-Entität an das Endgerät ein Inhaltsfragment (FRA) auf dem laufenden Wert des geforderten Qualitätsniveaus übermitteln kann,
**dadurch gekennzeichnet, dass** die Universaladresse (REQ2) eine Signatur (SGN) einer ersten Universaladresse umfasst, wobei die erste Universaladresse eine Information bezüglich eines zu kontrollierenden und dem Endgerät eigenen Übermittlungsparameters aufweist,
dass das Verfahren einen vorhergehenden Schritt aufweist, in dem eine zweite Server-Entität (SER) an das Endgerät die Signatur (SGN) der ersten Universaladresse bei Empfang einer ursprünglichen Anforderung (REQ) des globalen Inhalts überträgt, die vom Endgerät in Form der ersten Universaladresse stammt;
und dass die erste Server-Entität (CONT) die folgenden Schritte ausführt:
- Prüfen (S21) der Signatur der ersten Universaladresse,
- Vergleichen (S22) der Information und des laufenden Werts des geforderten Qualitätsniveaus, den die empfangene Universaladresse (REQ2) aufweist, und
- im Fall einer positiven Prüfung und eines positiven Vergleichs, Übermitteln an das Endgerät mindestens eines Inhaltsfragments (FRA) auf dem laufenden Wert des geforderten Qualitätsniveaus.

2. Verfahren nach Anspruch 1, **dadurch gekennzeichnet, dass** die Information einen Schwellwert des Übermittlungsparameters aufweist, und dass die erste Server-Entität den laufenden Wert des Übermittlungsparameters, den die empfangene Universaladresse (REQ2) aufweist, mit dem Schwellwert vergleicht, um die Kompatibilität (S22) zu prüfen.

3. Verfahren nach Anspruch 2, wobei das Endgerät über ein Zugriffsrecht auf eine vorbestimmte maximale Inhaltsqualität verfügt, **dadurch gekennzeichnet, dass** der Schwellwert dem Maximum der Inhaltsqualität entspricht, auf die das Endgerät ein Anrecht hat, und dass der laufende Wert des Qualitätsniveaus einem Maximum der Inhaltsqualität entspricht, das die Verbindungsbedingungen zwischen dem Endgerät und der ersten Server-Entität erlauben.

4. Verfahren nach einem der Ansprüche 2 und 3, wobei das Endgerät über ein Zugriffsrecht auf eine vorbestimmte maximale Anzahl von Inhaltsfragmenten verfügt, **dadurch gekennzeichnet, dass** der Schwellwert der maximalen Anzahl von Inhaltsfragmenten entspricht, auf die das Endgerät ein Anrecht hat, und dass der laufende Wert des Übermittlungsparameters einer maximalen Anzahl von zu übermittelnden Inhaltsfragmenten entspricht, die die Verbindungsbedingungen zwischen dem Endgerät und der ersten Server-Entität erlauben.

5. Verfahren nach Anspruch 1, **dadurch gekennzeichnet, dass** die zweite Server-Entität (SER) sich von der ersten Server-Entität (CONT) unterscheidet, dass die zweite Server-Entität eine Dienstplattform aufweist, und dass die erste Server-Entität eine Inhaltslieferplattform aufweist.

6. Verfahren nach einem der vorhergehenden Ansprüche, **dadurch gekennzeichnet, dass** die Fragmente und die Qualitätsniveaus in einer deskriptiven Datei (MAN) definiert sind, die die erste Server-Entität an das Endgerät bei Empfang einer Anforderung der deskriptiven Datei überträgt, die vom Endgerät in Form einer Universaladresse (REQ1) stammt, die die Signatur (SGN) der ersten Universaladresse aufweist.

7. Verfahren nach Anspruch 1, **dadurch gekennzeichnet, dass** es die folgenden Schritte aufweist:
- bei Empfang einer ursprünglichen Anforderung (REQ) des globalen Inhalts, die vom Endgerät (TER) in Form der ersten Universaladresse stammt, überträgt die zweite Server-Entität (SER) an das Endgerät die Signatur (SGN) der ersten Universaladresse, die die Information bezüglich eines zu kontrollierenden und dem Endgerät eigenen Übermittlungsparameters aufweist,
- das Endgerät (TER) sendet eine zweite Anforderung (REQ1) einer deskriptiven Datei, die die Fragmente und die Qualitätsniveaus definiert, wobei die zweite Anforderung (REQ1) für die erste Server-Entität (CONT) bestimmt ist und als Form eine Universaladresse hat, die die Signatur (SGN) der ersten Universaladresse umfasst,
- die erste Server-Entität (CONT) prüft bei Empfang der vom Endgerät stammenden zweiten Anforderung (REQ1) die Signatur (S10) und, wenn die Prüfung positiv ist, überträgt sie die deskriptive Datei (MAN) an das Endgerät (TER),
- auf der Basis einer Bestimmung der Verbindungsbedingungen und der Beschreibung der Fragmente und der Qualitätsniveaus sendet das Endgerät (TER) eine Anforderung (REQ2) mindestens eines Inhaltsfragments in Form einer Universaladresse (REQ2), die aufweist:
* einen laufenden Wert des Qualitätsniveaus für das mindestens eine Fragment, und
* die Signatur (SGN) der ersten Universaladresse,
- und, auf der Basis der empfangenen Universaladresse:
* prüft (S21) die erste Server-Entität (CONT) die Signatur (SGN) der ersten Universaladresse, um eine Authentizität der Information zu prüfen,
* vergleicht (S22) sie die Information bezüglich eines zu kontrollierenden Übermittlungsparameters und einen laufenden Wert des Übermittlungsparameters, den die empfangene Universaladresse (REQ2) aufweist, und
* im Fall einer positiven Prüfung und eines positiven Vergleichs übermittelt sie dem Endgerät mindestens ein Inhaltsfragment (FRA), das vom laufenden Wert des geforderten Qualitätsniveaus abhängt.

8. EDV-Programm, das Anweisungen zur Anwendung des Verfahrens nach einem der Ansprüche 1 bis 7 aufweist, wenn dieses Programm von einem Prozessor ausgeführt wird.

9. System, das eine erste Server-Entität (CONT) enthält, die für mindestens ein Endgerät (TER) bestimmte Inhaltsdaten in einer Vielzahl von aufeinanderfolgenden Fragmenten gemäß einer kontinuierlichen Betriebsart senden kann, wobei die Inhaltsdaten in der ersten Server-Entität (CONT) auf verschiedenen Qualitätsniveaus codiert und für jedes Qualitätsniveau in aufeinanderfolgende Fragmente zerlegt werden, zur Auswahl eines Qualitätsniveaus durch das Endgerät (TER) abhängig von Verbindungsbedingungen zwischen dem Endgerät und der ersten Server-Entität,
wobei bei Empfang einer Anforderung (REQ2) mindestens eines Inhaltsfragments, die von einem Endgerät in Form einer Universaladresse stammt, die mindestens einen laufenden Wert eines geforderten Qualitätsniveaus aufweist, die erste Server-Entität außerdem an das Endgerät ein Inhaltsfragment (FRA) auf dem laufenden Wert des geforderten Qualitätsniveaus übermitteln kann, wobei das System außerdem eine zweite Server-Entität (SER) enthält, die Einrichtungen aufweist, um zumindest an das Endgerät eine Signatur (SGN) einer ersten Universaladresse bei Empfang einer ursprünglichen Anforderung (REQ) des globalen Inhalts zu übertragen, die vom Endgerät in Form der ersten Universaladresse stammt, wobei die erste Universaladresse eine Information bezüglich eines zu kontrollierenden und dem Endgerät eigenen Übermittlungsparameters aufweist,
wobei die Universaladresse (REQ2) die Signatur (SGN) der ersten Universaladresse enthält,
wobei die erste Server-Entität (CONT) **dadurch gekennzeichnet ist, dass** sie Einrichtungen enthält, um zumindest:
- die Signatur (SGN) der ersten Universaladresse zu prüfen (S21),
- die Information und einen laufenden Wert des geforderten Qualitätsniveaus zu vergleichen (S22), den die empfangene Universaladresse (REQ2) enthält, und
- im Fall einer positiven Prüfung und eines positiven Vergleichs an das Endgerät mindestens ein Inhaltsfragment (FRA) auf dem laufenden Wert des geforderten Qualitätsniveaus zu übermitteln.

10. Endgerät (TER), das Inhaltsdaten in einer Vielzahl von aufeinanderfolgenden Fragmenten gemäß einer kontinuierlichen Betriebsart empfangen kann, wobei die Inhaltsdaten in einer ersten Server-Entität (CONT) auf verschiedenen Qualitätsniveaus codiert und für jedes Qualitätsniveau in aufeinanderfolgende Fragmente zerlegt werden, das eine Anforderung (REQ2) mindestens eines Inhaltsfragments in Form einer Universaladresse senden kann, die mindestens einen laufenden Wert eines geforderten Qualitätsniveaus aufweist, und von der ersten Server-Entität ein Inhaltsfragment (FRA) auf dem laufenden Wert des geforderten Qualitätsniveaus empfangen kann, **dadurch gekennzeichnet, dass** es Einrichtungen aufweist, um zumindest:
- an eine zweite Server-Entität eine ursprüngliche Anforderung (REQ) des globalen Inhalts in Form der ersten Universaladresse zu senden,
- von der zweiten Server-Entität eine Signatur (SGN) der ersten Universaladresse zu empfangen, die eine Information bezüglich eines zu kontrollierenden und dem Endgerät eigenen Übermittlungsparameters aufweist,
- eine zweite Anforderung (REQ1) einer deskriptiven Datei zu senden, die die Fragmente und die Qualitätsniveaus definiert, wobei die zweite Anforderung (REQ1) für die erste Server-Entität (CONT) bestimmt ist und als Form eine Universaladresse hat, die die Signatur (SGN) der ersten Universaladresse umfasst,
- die deskriptive Datei zu empfangen,
- Verbindungsbedingungen zwischen dem Endgerät und der ersten Server-Entität zu bestimmen und ein gefordertes Qualitätsniveau abhängig von den Verbindungsbedingungen auszuwählen, wobei die Anforderung (REQ2) eines Inhaltsfragments enthält:
* einen laufenden Wert des Übermittlungsparameters, und
* die Signatur (SGN) der ersten Universaladresse.

11. Endgerät (TER) nach Anspruch 10, **dadurch gekennzeichnet, dass** es außerdem Einrichtungen aufweist, um die Information zumindest in die ursprüngliche Anforderung (REQ) des globalen Inhalts einzufügen, um die erste Universaladresse zu formen.

12. System nach Anspruch 9, das außerdem ein Endgerät (TER) nach einem der Ansprüche 10 und 11 aufweist.

## Claims

1. Method of data communication, in which a first server entity (CONT) sends content data to at least one terminal (TER), as a plurality of successive fragments according to a continuous communication mode, the content data being encoded in the first server entity (CONT) at various quality levels and spliced into successive fragments for each quality level, with a view to selecting a quality level by the terminal (TER) as a function of conditions of connection between the terminal and the first server entity,
in which method, on receipt of a request (REQ2) for at least one fragment of content, arising from a terminal in the form of a universal address comprising at least one current value of a requested quality level, the first server entity is able to communicate to the terminal a fragment (FRA) of content with said current value of the requested quality level,
**characterized in that** said universal address (REQ2) includes a signature (SGN) of a first universal address, said first universal address comprising an item of information relating to a communication parameter to be monitored and specific to the terminal,
**in that** the method comprises a prior step in which a second server entity (SER) transmits to the terminal said signature (SGN) of the first universal address, on receipt of an initial request (REQ) for the global content, arising from the terminal in the form of the first universal address,
and **in that** the first server entity (CONT) performs the steps:
- verifying (S21) the signature of the first universal address,
- comparing (S22) said item of information and the current value of the requested quality level that the universal address received (REQ2) comprises, and
- in case of positive verification and positive comparison, communicating to the terminal at least one fragment (FRA) of content with the current value of the requested quality level.

2. Method according to Claim 1, **characterized in that** said item of information comprises a threshold value of said communication parameter, and **in that** the first server entity compares the current value of the communication parameter that the universal address received (REQ2) comprises with said threshold value to verify said compatibility (S22).

3. Method according to Claim 2, in which the terminal has a right of access to a predetermined maximum content quality, **characterized in that** the threshold value corresponds to the maximum content quality to which the terminal has a right, and **in that** the current value of quality level corresponds to a maximum of content quality that is allowed by the conditions of connection between the terminal and the first server entity.

4. Method according to one of Claims 2 and 3, in which the terminal has a right of access to a predetermined maximum number of content fragments, **characterized in that** the threshold value corresponds to said maximum number of content fragments to which the terminal has a right, and **in that** the current value of the communication parameter corresponds to a maximum number of fragments of content to be communicated that is allowed by the conditions of connection between the terminal and the first server entity.

5. Method according to Claim 1, **characterized in that** the second server entity (SER) is distinct from the first server entity (CONT), and **in that** the second server entity comprises a service platform and **in that** the first server entity comprises a content delivery platform.

6. Method according to one of the preceding claims, **characterized in that** said fragments and said quality levels are defined in a descriptive file (MAN) that the first server entity transmits to the terminal, on receipt of a request of said descriptive file, arising from the terminal in the form of a universal address (REQ1) comprising said signature (SGN) of the first universal address.

7. Method according to Claim 1, **characterized in that** it comprises the steps:
- on receipt of an initial request (REQ) for the global content, arising from the terminal (TER) in the form of said first universal address, the second server entity (SER) transmits to the terminal said signature (SGN) of the first universal address comprising said item of information relating to a communication parameter to be monitored and specific to the terminal,
- the terminal (TER) sends a second request (REQ1) for a descriptive file defining said fragments and said quality levels, said second request (REQ1) being intended for the first server entity (CONT) and being in the form of a universal address including said signature (SGN) of the universal address,
- the first server entity (CONT), on receipt of the second request (REQ1) arising from the terminal, verifies (S10) said signature and, if the verification is positive, transmits to the terminal (TER) said descriptive file (MAN),
- on the basis of a determination of the conditions of connection and of the description of the fragments and of the quality levels, the terminal (TER) sends a request (REQ2) for at least one fragment of content in the form of a universal address (REQ2) comprising:
* a current value of the quality level for said at least one fragment, and
* said signature (SGN) of the first universal address,
- and, on the basis of said universal address received, the first server entity (CONT):
* verifies (S21) the signature (SGN) of the first universal address, so as to verify an authenticity of said item of information,
* compares (S22) said item of information relating to a communication parameter to be monitored and a current value of the communication parameter that the universal address received (REQ2) comprises, and
* in case of positive verification and positive comparison, communicates to the terminal at least one fragment (FRA) of content dependent on the current value of the quality level requested.

8. Computer program comprising instructions for the implementation of the method according to one of Claims 1 to 7, when this program is executed by a processor.

9. System comprising a first server entity (CONT) able to send content data to at least one terminal (TER), as a plurality of successive fragments according to a continuous communication mode, the content data being encoded in said first server entity (CONT) at various quality levels and spliced into successive fragments for each quality level, with a view to selecting a quality level by the terminal (TER) as a function of conditions of connection between the terminal and the first server entity,
in which, on receipt of a request (REQ2) for at least one content fragment, arising from a terminal in the form of a universal address comprising at least one current value of a requested quality level, the first server entity is moreover able to communicate to the terminal a fragment (FRA) of content with said current value of the requested quality level,
said system furthermore comprising a second server entity (SER), comprising means at least for transmitting to the terminal a signature (SGN) of a first universal address, on receipt of an initial request (REQ) for the global content, arising from the terminal in the form of the first universal address, said first universal address comprising an item of information relating to a communication parameter to be monitored and specific to the terminal,
said universal address (REQ2) comprising the signature (SGN) of the first universal address, the first server entity (CONT) being **characterized in that** it comprises means at least for:
- verifying (S21) the signature (SGN) of the first universal address,
- comparing (S22) said item of information and a current value of the quality level requested that the universal address received (REQ2) comprises, and
- in case of positive verification and positive comparison, communicating to the terminal at least one fragment (FRA) of content with the current value of the quality level requested.

10. Terminal (TER) able to receive content data as a plurality of successive fragments according to a continuous communication mode, the content data being encoded in a first server entity (CONT) at various quality levels and spliced into successive fragments for each quality level, able to send a request (REQ2) for at least one fragment of content in the form of a universal address comprising at least one current value of a quality level requested, and able to receive from the first server entity a fragment (FRA) of content with the said current value of the quality level requested, **characterized in that** it comprises means at least for:
- sending to a second server entity an initial request (REQ) for the global content in the form of said first universal address,
- receiving from the second server entity a signature (SGN) of the first universal address comprising an item of information relating to a communication parameter to be monitored and specific to the terminal,
- sending a second request (REQ1) for a descriptive file defining said fragments and said quality levels, said second request (REQ1) being intended for the first server entity (CONT) and being in the form of a universal address including said signature (SGN) of the first universal address,
- receiving said descriptive file,
determining conditions of connection between the terminal and the first server entity and selecting a quality level requested as a function of the conditions of connection, in which the request (REQ2) for a content fragment comprises:
* a current value of said communication parameter, and
* said signature (SGN) of the first universal address.

11. Terminal (TER) according to Claim 10, **characterized in that** it furthermore comprises means for inserting said item of information at least into the initial request (REQ) for the global content so as to form said first universal address.

12. System according to Claim 9 furthermore comprising a terminal (TER) according to one of Claims 10 and 11.
